(19) Europäisches Patentamt
European Patent Office
Office européen des brevets

(11) Numéro de publication: 0 184 966
B1

# (12) FASCICULE DE BREVET EUROPÉEN

(45) Date de publication du fascicule du brevet: **19.04.89**

(51) Int. Cl.⁴: **C 08 L 83/04**, C 08 K 5/54 // (C08K5/54, 5:57)

(21) Numéro de dépôt: **85420191.0**

(22) Date de dépôt: **23.10.85**

(54) **Composition organopolysiloxanique vulcanisable à temperature ambiante en élastomère auto-adhérent.**

(30) Priorité: **29.10.84 FR 8416481**

(43) Date de publication de la demande: **18.06.86 Bulletin 86/25**

(45) Mention de la délivrance du brevet: **19.04.89 Bulletin 89/16**

(84) Etats contractants désignés: **AT BE CH DE FR GB IT LI LU NL SE**

(56) Documents cité:
**FR-A-2 152 908**

**CHEMICAL ABSTRACTS, vol. 100, no. 4, 13 janvier 1984, page 36, abrégé 23529b, Columbus, Ohio, US; & JP - A - 58 104 282 (SHIN-ETSU CHEMICAL INDUSTRY CO., LTD.) 21.06.1983**

**Le dossier contient des informations techniques présentées postérieurement au dépôt de la demande et ne figurant pas dans le présent fascicule.**

(73) Titulaire: **RHONE- POULENC CHIMIE, 25, quai Paul Doumer, F-92408 Courbevoie Cédex (FR)**

(72) Inventeur: **Letoffe, Michel, 5, Avenue de Limburg, F-69110 Sainte- Foy- Les- Lyon (FR)**

(74) Mandataire: **Seugnet, Jean Louis, RHONE- POULENC INTERSERVICES Service Brevets Chimie Centre de Recherches de Saint- Fons B.P. 62, F-69192 Saint- Fons Cédex (FR)**

**EP 0 184 966 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

La présente invention concerne une composition organopolysiloxanique vulcanisable dès la température ambiante en élastomère auto-adhérent sur des supports les plus variés en particulier sur le verre, le bois et les matières plastiques tel que le polychlorure de vinyle (PVC). Plus particulièrement, la présente invention vise des compositions présentées avant emploi sous forme de 2 composantes ou de 2 emballages.

Les compositions organopolysiloxaniques vulcanisables dès la température ambiante sont bien connues et sont classées en 2 groupes distincts: les compositions monocomposantes et les compositions bicomposantes ou à 2 emballages.

Les compositions monocomposantes réticulent quand elles sont exposées à l'humidité de l'air généralement sans l'aide de catalyseurs.

Par contre les compositions bicomposantes sont commercialisées et stockées sous la forme de 2 composantes, une première composante contenant les matériaux polymériques de base et la deuxième composante contenant le catalyseur. Les 2 composantes sont mélangées de façon extemporanée lors de l'emploi et le mélange réticule sous la forme d'un élastomère relativement dur.

Ces compositions à 2 composantes sont bien connues et sont notamment décrites dans l'ouvrage de Walter Noll "Chemistry and Technology of Silicones" 1968, 2ème édition aux pages 395 à 398 et dans le brevet US-A-2 843 555.

Ces compositions comportent essentiellement 4 ingrédients différents:
- un diorganopolysiloxane à terminaisons silanol
- un agent de réticulation, généralement un silicate ou un polysilicate
- un catalyseur à l'étain
- une charge

Vis-à-vis des compositions monocomposantes, les compositions bicomposantes présentent l'avantage d'être moins onéreuses.

Pour certaines applications, elles sont de manipulation plus aisées et peuvent être coulées, moulées et réticulées sur place à température ambiante. Toutefois elles présentent l'inconvénient d'adhérer de façon médiocre aux divers substrats tels que verre, métaux, bois, matières plastiques, béton etc... Pour remédier à cet inconvénient, on a déjà proposé d'appliquer au préalable sur les substrats une couche de primaire d'adhérence sur laquelle, après sèchage, on applique la composition organosiloxanique. Des primaires usuels sont par exemple un mélange d'alcoxysilane et de résine en solution organique. L'utilisation de ces primaires nécessite toutefois l'application d'un produit supplémentaire, ce qui augmente les coûts.

Dans les brevets US-A-3 801 572 et US-A-3 888 815 on a déjà proposé des compositions organopolysiloxaniques auto-adhérentes à deux composantes par incorporation dans la composition de silanes à fonction amine.

Ces silanes à fonction amine sont définies de façon extrêmement large. Toutefois, ce brevet ne pose pas le problème, ni ne propose une solution, de fournir une composition organopolysiloxanique auto-adhérente à deux composantes qui possèdent en même temps les propriétés suivantes:

a) - une adhérence remarquable sur les substrats les plus divers et notamment sur le verre, les métaux en particulier l'aluminium et les matières plastiques, en particulier le PVC...

b) - une bonne tenue à la "réversion". En effet, lorsque ces élastomères connus du type ci-dessus sont soumis à un chauffage immédiatement ou peu aprés leur préparation, par exemple 24 heures après le mélange du diorganopolysiloxane, du réticulant et du sel d'étain, il se produit très souvent un phénomène que les spécialistes désigent sous le nom de "réversion", lequel part du milieu de la section transversale des élastomères. Au cours de ce chauffage les élastomères se liquifient ou se ramollissent à leur partie interne, quoiqu'ils restent la plupart du temps solides au niveau de leur surface; néanmoins, la pellicule plus ou moins mince qui subsiste dans ces conditions est fréquemment collante. Cette "réversion" peut déjà se produire à des températures supérieures à 80°C. Toutefois, dans la plupart des cas, elle se produit à des températures supérieures à 100°C, et elle est particulièrement marquée lorsque le chauffage des élastomères s'effectue en l'absence totale ou presque de l'air, c'est- à -dire lorsque, au cours du chauffage, les élastomères se trouvent dans un système partiellement ou totalement confiné. Cette "reversion" constitue donc un inconvénient très gênant en particulier pour certaines applications ou les élastomères durcis sont chauffés après réticulation.

c) - une réticulation de la composition complète et uniforme dans toute sa masse à température ambiante.

d) - une prise rapide en surface.

Ce but, et d'autres, est atteint par la présente invention qui concerne en effet une composition organopolysiloxanique vulcanisable dès la température ambiante, caractérisée en ce qu'elle comporte:

(1) au moins un polymère alpha-oméga dihydroxydiorganopolysiloxanique de viscosité de 500 à 1 000 000 mPa.s à 25°C, dont les radicaux organiques sont des radicaux hydrocarbonés monovalents,

(2) au moins une charge,

(3) au moins un agent de réticulation choisi parmi

(3a) les polyalcoxysilanes de formule.:

$(R_1O)_a Si (R_2)_{4-a}$ (Ia)

dans laquelle a est 3 ou 4, $R_1$ et $R_2$, identiques ou différents choisis parmi un radical hydrocarboné monovalent ayant jusqu'à 8 atomes de carbone, $R_1$ peut sigifier en outre un radical $R_3OR_1$ dans lequel $R_3$ est un radical hydrocarboné divalent ayant jusqu'à 6 atomes de carbone et $R_1$ a la signification ci-dessus;

(3b) les polyalcoxysiloxanes présentant au moins deux radicaux alcoxy liés à un atome de silicium par molécule dans lesquels les atomes de silicium sont reliés par des liaisons Si-O-Si, les autres valences des atomes de silicium étant satisfaites par des radicaux $R_1O$ ou $R_2$, $R_1$ et $R_2$ ayant la signification indiquée ci-dessus;

(4) une quantité catalytiquement efficace d'au moins un composé catalytique de l'étain, (5) au moins un silane de formule:

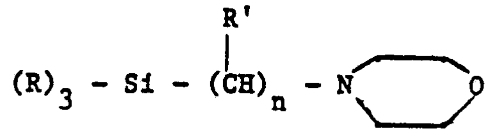

(I)

dans laquelle le radical R est un radical alkyle ou alcoxy ayant inclusivement de 1 à 4 atomes de carbone, au moins deux des radicaux R sont alcoxy, R' est un radical alkyle ayant inclusivement de 1 à 3 atomes de carbone et n est un nombre entier compris inclusivement entre 3 et 10;

de préférence n = 3, R' = H et R = méthyle ou éthyle.

Dans ce qui suit, sauf mention contraire, les parties et pourcentages sont en poids.

On utilise généralement pour 100 parties de (1) de 5 à 80 parties de (2), de 0,5 à 15 parties de (3), de 0,005 à 1 partie, de préférence de 0,01 à 0,5 partie de (4) calculée en poids d'étain métal et de 0,5 à 10 parties de (5).

Les polymères alpha-oméga-dihydroxydiorganopolysiloxaniques (1), utilisés dans les compositions de l'invention, ont une viscosité de 500 à 1 million de m.Pa.s. à 25° C, de préférence 800 à 500 000 m.Pa. s. à 25° C, ils sont constitués principalement de motifs diorganosiloxyles mais la présence d'autres motifs tels que monoorganosiloxyles n'est pas exclue dans la proportion d'au plus 2 % en nombre.

A titre de radicaux organiques, liés aux atomes de silicium de ces polymères, peuvent être cités ceux du type:

- alkyle ayant de 1 à 4 atomes de carbone comme les radicaux méthyle, éthyle, propyle
- halogénoalcoyle ayant de 3 à 4 atomes de carbone comme les radicaux trifluoro-3,3,3 propyle, trifluoro-4,4,4 butyle
- aryle ayant de 6 à 8 atomes de carbone comme les radicaux phényle, tolyle, xylyle
- halogénoaryle ayant de 6 à 7 atomes de carbone comme les radicaux chlorophényle, dichlorophényle, trichlorophényle, tétrachlorophényle, trifluorométhylphényle
- cyanoalkyle ayant de 3 à 4 atomes de carbone comme les radicaux béta-cyanoéthyle, gamma-cyanopropyle.

Les radicaux méthyles représentent au moins 60 % de la totalité de ces radicaux organiques, de préférence 75 %.

Diverses techniques existent pour la préparation de ces polymères (1) mais on utilise généralement celles qui ont fait leur preuve industriellement par exemple la polymérisation de diorganocyclopolysiloxanes à l'aide d'une quantité catalytique d'un agent alcalin ou acide suivie du traitement des polymérisats avec des quantités calculées d'eau (brevets français FR-A-1 134 005, FR-A-1 198 749); en outre on peut se les procurer auprès des fabricants de silicones.

Des charges classiques (2) sont employées pour conférer aux élastomères découlant du durcissement des compositions de l'invention des propriétés mécaniques acceptables, elles sont introduites, comme signalé plus haut, à raison de 5 à 80 parties, de préférence 20 à 60 parties, pour 100 parties de polymère (1) et peuvent être choisies parmi les produits :

- minéraux tels que la silice de combustion, de précipitation, de diatomées, le quartz broyé, les silicates d'aluminium, les silicates mixtes d'aluminium et de magnésium, le silicate de zirconium, la poudre de mica, le carbonate de calcium, la poudre et les fibres de verre, les oxydes du titane du type oxyde de combustion et rutile, le zirconate de baryum, le sulfate de baryum, le métaborate de baryum, le nitrure de bore, le lithopone, les oxydes de fer, de zinc, d'aluminium, de zirconium, de magnésium, le graphite, les noirs de fumée conducteurs ou non, l'amiante, l'argile calcinée;
- organiques tels que les phtalocyanines, la poudre de liège, la sciure de bois, les fibres synthétiques, les polymères synthétiques (polytétrafluoroéthylène, polyéthylène, polypropylène, polystyrène, polychlorure de vinyle).

Ces charges peuvent être éventuellement modifiées en surface, et plus spécialement les charges d'origine minérale, par traitement avec les composés organosiliciques habituellement employés pour cet usage tels que des diorganocyclopolysiloxanes, des hexaorganodisiloxanes, de l'hexaméthyldisilazane, des diorganocyclopolysilazanes (brevets français FR-A-1 136 884, FR-A-1 136 885, FR-A-1 236 505, brevet anglais GR-A-1 024 234). Ces charges ainsi modifiées contiennent, dans la plupart des cas de 3 à 30 % de leur poids de composés organosiliciques.

Les agents de réticulation (3) utilisés, comme mentionnés plus haut, à raison d'au plus 15 parties, de préférence d'au plus 7 parties, pour 100 parties de polymère (1) servent principalement à réticuler la composition.

Les agents de réticulation (3) sont des produits bien connus décrits notamment dans les brevets français FR-A-1 330 625, FR-A-2 121 289, FR-A-2 121 631 et FR-A-2 458 572 cités comme référence.

Par radical hydrocarboné monovalent pour $R_1$ et $R_2$, on entend plus particulièrement des radicaux alkyle,

alcényle, alcoxyalkyle, phényle, alkylphényle, phénylalkylé éventuellement substitués par un atome d'halogène.

On peut par exemple utiliser les silanes de formule:

$CH_3\,Si(OCH_3)_3$

$CH_3\,Si\,(OCH_2\,CH_3)_3$

$CH_3\,Si\,(OCH_2\,CH_2\,OCH_3)_3$

$Si\,(O\,CH_2\,CH_2\,OCH_3)_4$

$Si\,(OCH_3)_4$

$Si\,(OCH_2\,CH_3)_4$

$CH_2 = CH\,Si\,(OCH_2\,CH_2\,OCH_3)_3$

$C_6H_5\,Si\,(OCH_3)_3$

$C_6H_5\,Si\,(OCH_2\,CH_2\,OCH_3)_3$

$CH_3Si\,(OCH_2\text{-}CH\,OCH_3)_3$

$|CH_3$

Parmi les agents de réticulation (3) on préfère plus particulièrement les alkyltrialkoxysilanes, les silicates d'alkyle et les polysilicates d'alkyle dans lesquels les radicaux organiques sont des radicaux alkyles ayant de 1 à 4 atomes.

Les silicates d'alkyle peuvent être choisis parmi le silicate de méthyle, le silicate d'éthyle, le silicate d'isopropyle, le silicate de n-propyle, et les polysilicates choisis parmi les produits d'hydrolyse partielle de ces silicates; ce sont des polymères constitués d'une proportion importante de motifs de formule $(R^4O)_2SiO$ et d'une faible proportion de motifs de formule $(R^4O)_3SiO_{0,5}$, $R^4OSiO_{1,5}$ et $SiO_2$; le symbole $R^4$ représentant les radicaux méthyle, éthyle, isopropyle, n-propyle. Pour les caractériser on se base habituellement sur leur teneur en silice qui est établie par dosage du produit d'hydrolyse totale d'un échantillon.

Leurs méthodes de préparation sont bien connues et figurent en particulier dans l'ouvrage "Chemistry and Technology of Silicones" de W. Noll aux pages 648 à 659. Ces polymères, afin d'être compatibles et/ou réactifs avec les autres ingrédients mis en oeuvre pour la préparation des compositions de l'invention, doivent posséder la faculté de se dissoudre dans les solvants hydrocarbonés usuels tels que le toluène, le xylène, le méthylcyclohexane dans la proportion d'au moins 50 parties de polymères pour 100 parties de solvants.

On peut en particulier utiliser comme polysilicate, un silicate d'éthyle partiellement hydrolysé commercialisé sous la marque "Ethyl Silicate-40" par Union Carbide Corporation.

Le composé (4) est un composé catalytique à l'étain utilisé ou proposé pour catalyser ce type de composition, et qui peut être en particulier un sel d'étain d'un acide mono- ou dicarboxylique. Ces carboxylates d'étain sont décrits notamment dans l'ouvrage de Noll (Chemistry and technology of silicones" page 337, Academic Press, 1968 2ème édition. On peut en particulier citer le naphténate, l'octanoate, l'oléate, le butyrate, le dilaurate de dibutylétain, le diacétate de dibutylétain.

On peut également utiliser les sels d'acides monocarboxyliques ramifiés sur un atome de carbone aliphatique en position alpha par rapport au groupe carboxyle et ayant au moins 8 atomes de carbone par molécule, tels que décrits dans le brevet français FR-A-2 066 159, en particulier le diversatate de dibutylétain.

On peut également utiliser comme composé catalytique à l'étain le produit de réaction d'un sel d'étain, en particulier d'un dicarboxylate d'étain sur du polysilicate d'éthyle comme décrit dans le brevet US-A-3 186 963. On peut également utiliser le produit de réaction d'un dialkyldialcoxysilane sur un carboxylate d'étain comme décrit dans le brevet US-A-3 862 919.

On peut également utiliser le produit de réaction d'un silicate d'alkyle ou d'un alkyle trialcoxysilane sur le diacétate de dibutylétain comme décrit dans le brevet belge 842 305.

On peut enfin utiliser un chélate d'étain de valence IV comme décrit dans la demande de brevet français 83.20913 déposée le 28.12.1983 au nom de la demanderesse et en particulier les chélates de formule:

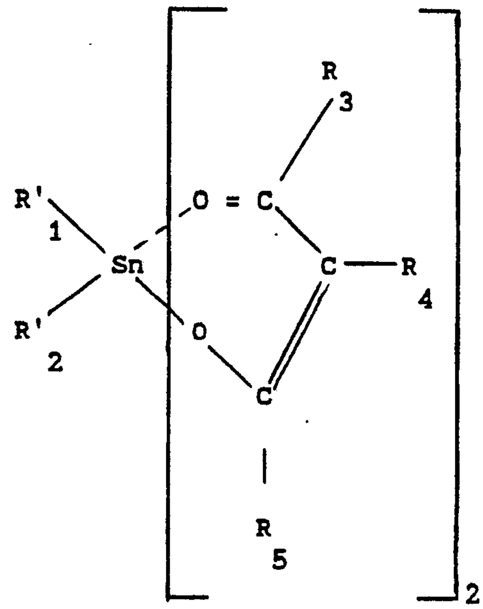

(II)

dans laquelle:

Les radicaux $R'_1$ et $R'_2$, deniques ou defférentent représents un radical alkyle en $C_1$ - $C_{12}$, un radical alcoxy en $C_1$ - $C_{12}$, un radical alcènyle en $C_1$ - $C_{12}$, un radical acycle en $C_1$ - $C_{12}$, un radical acyloxy en $C_1$ - $C_6$, un radical cycloalkyle éventuellement halogéné en $C_5$ - $C_8$, en radical aryle mononucléaire éventuellement halogéné, un radical arylalkyle mononucléaire dont la partie alkyle est en $C_1$ - $C_4$, $R'_1$ et $R'_2$ étant différents de l'atome d'hydrogène.

$R_3$ et $R_5$ identiques ou différents sont choisis parmi l'atome d'hydrogène, un radical ne contenant pas plus de 8 atomes de carbone environ choisi parmi les radicaux alkyle, halogénoalkyle, cyanatoalkyle, alcoxy, halogenoalcoxy, cyanoalcoxy, aryle mononucléaire éventuellement halogéné et arylalkyle mononucléaire éventuellement halogéné dont la partie alkyle est en $C_1$ - $C_4$.

$R_4$ est choisi parmi l'atome d'hydrogène, un radical ne contenant pas plus de 8 atomes de carbone environ choisi parmi un radical alkyle, halogénoalkyle et aryle ou bien $R_4$ conjointement avec $R_5$, forme un radical hydrocarboné cyclique ne contenant pas plus de 12 atomes de carbone et éventuellement substitué pas des radicaux chloro, nitro et cyano.

Les chélates d'étain sont des produits connus dont la préparation est décrite par exemple dans le brevet US 3 055 845 qui est cité comme référence dans la présente description de même que les autres brevets cités précédemment.

Come exemples de chélates d'étain de valence IV hexacoordiné on peut citer les produits suivants:

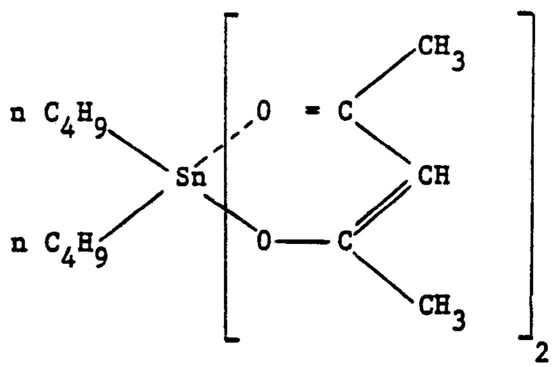

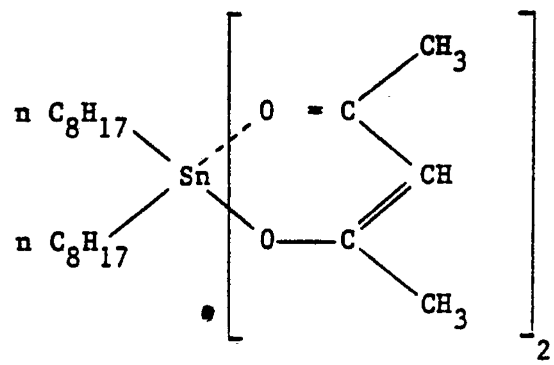

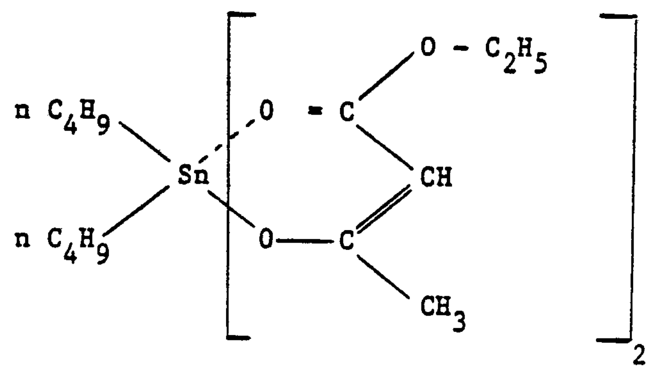

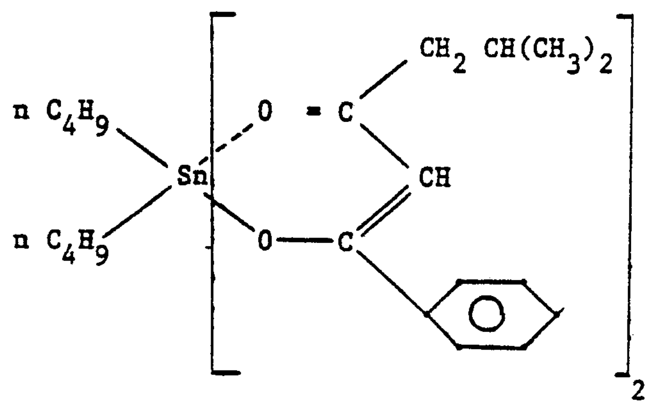

Outre les charges, des adjuvants divers (6) peuvent être introduits dans les compositions de l'invention tels que des pigents minéraux ou organiques et des polymères organosiliciques. Ces derniers, qui jouent le rôle de plastifiants, de stabilisants, d'agents thixotropes ou d'agents facilitant l'extrusion des compositions sont utilisés à raison d'au plus 70 parties, de préférence d'au plus 60 parties, pour 100 parties de polymères (I). Ils sont choisis dans le groupe constitué:

- des polymères alpha-oméga bis(triorganosiloxy) diorganopolysiloxaniques de viscosité d'au moins 10 mPa.s. à 25°C, constitués principalement de motifs diorganosiloxyles et au plus 1 % de motifs monoorganosiloxyles, les radicaux organiques liés aux atomes de silicium étant choisis parmi les radicaux méthyle, vinyle, phényle, 60 % au moins de ces radicaux organiques étant des radicaux méthyles. La viscosité de ces polymères peut atteindre plusieurs dizaines de millions de mPa.s. à 25°C, ils comprennent donc des huiles d'aspect fluide à visqueux et des gommes molles à dures. Ils sont préparés selon des techniques usuelles décrites plus précisément dans les brevets français FR-A-978 058, FR-A-1 025 150, FR-A-1 108 764.

- des polymères méthylpolysiloxaniques ramifiés, liquides, ayant de 1,6 à 1,99 groupe organique par atome de silicium, constitués de motifs de formules $(CH_3)_3SiO_{0,5}$, $(CH_3)_2SiO$ et $CH_3SiO_{1,5}$ et renfermant de 0,3 à 6 % de groupes hydroxyles. Ils peuvent être obtenus par hydrolyse des chlorosilanes correspondants comme montré dans le brevet français 1 408 662.

- des huiles diorganopolysiloxaniques bloquées par des groupes hydroxyles et/ou alcoxyles inférieurs, de faible viscosité en général comprise dans l'intervalle 2 à 2000 mPa.s. à 25°C, les radicaux organiques liés aux atomes de silicium étant, comme précédemment, choisis parmi les radicaux méthyle, vinyle, phényle, 40 % au moins de ces radicaux organiques étant des radicaux méthyles; comme groupes alcoxyles inférieurs bloqueurs de chaîne peuvent être cités les groupes méthoxyle, éthoxyle, isopropoxyle, propoxyle, butoxyle, isobutoxyle, tertiobutoxyle. Ces huiles sont également préparées selon des techniques usuelles décrites plus précisément dans les brevets français 938 292, 1 014 674, 1 116 196, 1 278 281, 1 276 619.

Le composé (5) est un silane de formule:

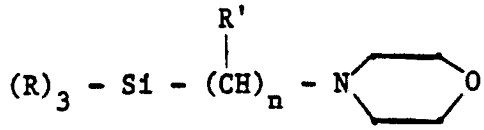 (I)

R, R' et n ayant la signification donnée ci-dessus et de préférence n = 3, R' = H et R est un radical alcoxy.

Les produits de formule (I) sont généralement des produits connus.

En particulier le N-(3-triméthoxysilylpropyl) morpholine et son procédé de préparation est décrit par John L. Speier, J. Org. Chem. Vol. 36, n° 21, 1971, p. 3120.

Au cas où les produits de formule (I) sont nouveaux, on les obtient facilement par exemple par réaction sous reflux du gamma-chlorosilane correspondant de formule (III):

$$(R)_3\ Si - (\overset{\overset{R'}{|}}{C}H)_n - Cl \qquad (III)$$

dans laquelle R, R' et n ont la sigification ci-dessus sur de préférence un excès molaire de morpholine, à une température comprise entre 100 et 150°C.

Il faut remarquer que les silanes visés par l'invention ne sont pas décrits dans les brevets US-A 3 801 572 et US-A 3 888 815 précités. Ces 2 brevets ne comportent en outre aucune indication pour guider l'homme de métier sur le choix d'un silane qui confère à la composition organopolysiloxanique à la fois notamment une bonne tenue à la reversion et une bonne adhérence sur des supports variés quel que soit le catalyseur à l'étain utilisé.

Si la composition organopolysiloxanique n'est pas utilisée dans les 10 mn, elle est stockée sous forme de 2 composantes.

La première composante peut contenir les composés (1) et (2) et, éventuellement, les adjuvants divers (6), la deuxième composante peut contenir les composés (3), (4) et (5).

Quand on désire réaliser la composition vulcanisable à température ambiante, on mélange les 2 composantes pour obtenir une composition qui est étalée, moulée, laminée suivant l'utilisation finale envisagée. Au bout d'un laps de temps compris entre 15 et 40 mm, la composition a durci suffisamment pour garder sa forme définitive. Au bout de 5 heures environ, la composition a durci de façon homogène jusqu'à atteindre 70 % de sa dureté Shore A finale.

Comme illustré dans les exemples non limitatifs ci-après, les compositions présentent une tenue remarquable à la reversion.

Les compositions de l'invention peuvent être employées dans de multiples domaines tels que:

- le collage des matériaux les plus variés comme les métaux, le bois, la maçonnerie, la céramique, les matières plastiques, le verre, les stratifiés tissus de verre-résines organiques, les caoutchoucs organiques et synthétiques, l'amiante, les produits tissés ou non tissés à base de fibres minérales, organiques ou synthétiques,
- la fabrication de moules pour la reproduction d'objets sculptés de forme compliquée comme les meubles de style, les tableaux de bord de véhicules à moteur,
- la protection des connexions en électronique et électrotechnique,
- le jointoiement pour les pare-brise de voiture, les doubles vitrages, les installations sanitaires.

Les exemples suivants illustrent l'invention (dans tout ce qui suit les parties sont exprimées en poids):

**Exemple 1**

On prépare une composition polysiloxanique P par mélange de:

- 300 parties d'huile alpha-oméga-dihydroxypolydiméthylsiloxanique de viscosité 60 000 mPa.s. à 25°C
- 300 parties d'huile diméthylsiloxanique bloquée à chaque extrémité par un motif triméthylsiloxy de viscosité 20 mPa.s. à 25°C
- 390 parties de quartz broyé de granulométrie comprise entre 0,5 et 10 microns et 400 ppm d'eau.

A 100 g de composition P on ajoute 0,8 g de polysilicate d'éthyle comme agent réticulant, 4 différents composés catalytiques d'étain métal ainsi qu'un silane aminé conforme à l'invention.

On coule les compositions obtenues dans une capsule cylindrique d'un centimètre de hauteur et dont le diamètre d'une section droite est de un centimètre et on mesure le temps de prise des deux éprouvettes, ainsi que la dureté Shore A (norme ASTMD 2240) initiale à température ambiante et au bout de plusieurs jours en maintenant l'éprouvette à 120°C pour apprécier la tenue à la réversion. Cette dureté est mesurée en surface et sur le fond de l'éprouvette.

Les résultats obtenus sont rassemblés dans le tableau I ci-après.

**Exemple comparatif 2**

On procède de la même façon que dans l'exemple 1 sauf que l'on remplace le silane aminé de l'invention par différents silanes connus.

Les résultats sont rassemblés dans le tableau II ci-après.

Dans les tableaux I et II

+ : adhérence correcte
o : adhérence médiocre ou nulle
A : dilaurate de dibutylétain
B : diversatate de dibutylétain
C : produit de réaction de 8 h à 120°C de 20 parties de dilaurate de dibutylétain avec 60 g de polysilicate d'éthyle conformément à l'enseignement de US-A 3 186 963
D : bis (acétylacétonate) de dibutylétain
CAT : catalyseur: nature du catalyseur (A, B, C ou D) et quantité en g de composé catalytique d'étain pour 100 g de P.

Tableau I

| Silane nature | Silane quantité (en g) pour 100 g de P. | CAT. | Temps de prise en surface | Durete Shore A initiale | Durete Shore A 2 jours à 120°C | Durete Shore A 5 jours à 120°C | Adherence Verre | Adherence Alu | Adherence PVC |
|---|---|---|---|---|---|---|---|---|---|
| $(CH_3O)_3Si(CH_2)_3$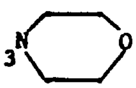 | 2,0 | A:0,2 | 17 mn | 17 | 6 | 5 | + | + | + |
| " | " | B:0,2 | 40 mn | 16 | 7 | 3 | + | + | + |
| " | " | C:0,4 | 35 mn | 16 | 12 | 9 | + | + | + |
| " | " | D:0,1 | 25 mn | 16 | 8 | 6 | + | + | + |
| $(C_2H_5O)_3Si(CH_2)_3$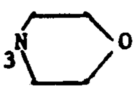 | 2,0 | A:0,2 | 1h | 18 | 9 | 4 | + | + | + |
| " | " | B:0,2 | 1 h 40 mn | 18 | 10 | 5 | + | + | + |
| " | " | C:0,4 | 1 h 5 mn | 20 | 15 | 10 | + | + | + |
| " | " | D:0,1 | 25 mn | 19 | 11 | 6 | + | + | + |

Tableau II

| Silane nature | Silane quantité (en g) pour 100 g de P. | CAT. | Temps de prise en surface | Durete Shore A initiale | Durete Shore A 2 jours à 120°C | Durete Shore A 5 jours à 120°C | Adherence Verre | Adherence Alu | Adherence PVC |
|---|---|---|---|---|---|---|---|---|---|
| $(CH_3O)_3Si(CH_2)_3NH_2$ | 2,0 | A:0,2 | 2 mn | 2 | 0 | 0 | + | + | + |
| " | " | B:0,2 | 5 mn | 3 | 0 | 0 | + | + | + |
| " | " | C:0,4 | 3 mn | 2 | 0 | 0 | + | + | + |
| " | " | D:0,1 | 3 mn | 2 | 0 | 0 | + | + | + |
| $(CH_3O_3O)_3Si(CH_2)_3\text{-}NH(CH_2)_2NH_2$ | 2,0 | A:0,2 | 5 mn | 2 | 0 | 0 | + | + | + |
| " | " | B:0,2 | 3 mn | 3 | 0 | 0 | + | + | + |
| " | " | C:0,4 | 4 mn | 2 | 0 | 0 | + | + | + |
| " | " | D:0,1 | 3 mn | 4 | 0 | 0 | + | + | + |

**Revendications**

1. Composition organopolysiloxanique vulcanisable dès la température ambiante, caractérisée en ce qu'elle comporte:

(1) au moins un polymère alpha-oméga dihydroxydiorganopolysiloxanique de viscosité comprise entre 500 et 1.000.000 mPa.s à 25°C dont les radicaux organiques sont des radicaux hydrocarbonés monovalents;

(2) au moins un charge;

(3) au moins un agent de réticulation choisi parmi

(3a) les polyalcoxysilanes de formule:

$(R_1O)_a$ Si $(R_2)_{4-a}$ (Ia)

dans laquelle a est 3 ou 4, $R_1$ et $R_2$, identiques ou différents choisis parmi un radical hydrocarboné monovalent ayant jusqu'à 8 atomes de carbone, $R_1$ peut signifier en outre un radical $R_3OR_1$ dans lequel $R_3$ est un radical hydrocarboné divalent ayant jusqu'à 6 atomes de carbone et $R_1$ a la signification ci-dessus;

(3b) les polyalcoxysilanes présentant au moins deux radicaux alcoxy liés à un atome de silicium par molécule dans lesquels les atomes de silicium sont reliés par des liaisons Si-O-Si, les autres valences des atomes de silicium étant satisfaites par des radicaux $R_1O$ ou $R_2$, $R_1$ et $R_2$ ayant la signification indiquée ci-dessus;

(4) quantité catalytiquement efficace d'au moins un composé catalytique de l'étain;

(5) au moins un silane de formule:

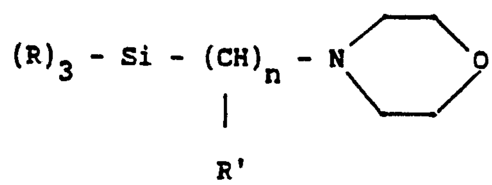 (I)

dans laquelle le radical R est un radical alkyle ou alcoxy ayant inclusivement de 1 à 4 atomes de carbone au moins deux des radicaux R sont alcoxy, R' est choisi parmi un atome d'hydrogène et un radical alkyle ayant inclusivement de 1 à 3 atomes de carbone, et n est un nombre entier compris entre 3 et 10.

2. Composition selon la revendication 1, caractérisée en ce que le silane est choisi parmi:

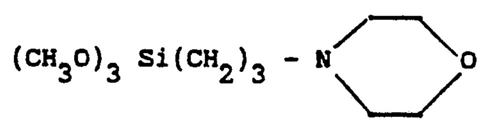

et

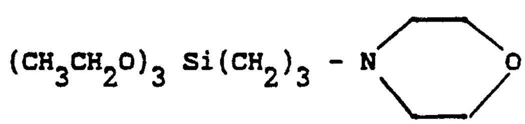

3. Composition selon la revendication 1 ou 2, caractérisée en ce que l'agent de réticulation (3) est choisi parmi les silicates d'alkyle, les alkyltrialcoxysilanes, et les polysilicates d'alkyle dans lesquels les radicaux organiques sont des radicaux alkyle ayant de 1 à 4 atomes de carbone.

4. Composition selon l'une quelconque des revendications précédentes, caractérisée en ce qu'elle comporte pour 100 parties de (1), 5 à 80 parties de (2), 0,5 à 15 parties de (3), 0,005 à 1 partie de (4) calculée en poids d'étain métal et de 0,5 à 10 parties de (5).

5. Composition selon l'une quelconque des revendications précédentes, caractérisée en ce que le composé (4) est choisi parmi un composé de formule:

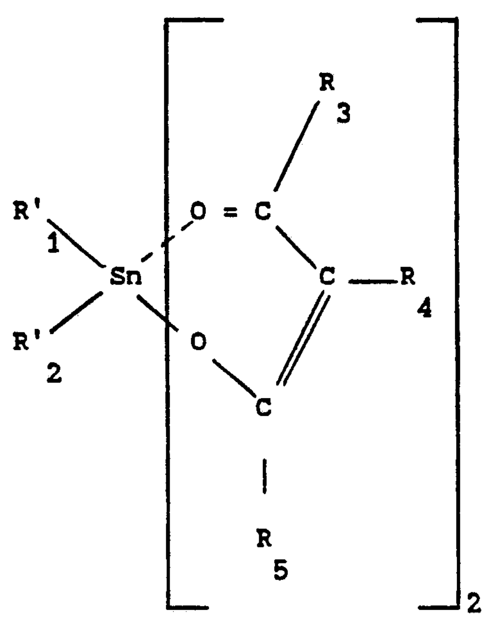 (II)

dans laquelle:

Les radicaux $R'_1$ et $R'_2$, identiques ou différents représentent un radical alkyle en $C_1$ - $C_{12}$, un radical alcoxy en $C_1$ - $C_{12}$, un radical alcényle en $C_1$ - $C_{12}$, un radical acyle en $C_1$ - $C_{12}$, un radical acyloxy en $C_1$ - $C_6$, un radical cycloalkyle éventuellement halogéné en $C_5$ - $C_8$, un radical aryle mononucléaire dont la partie alkyle est en $C_1$ - $C_4$, $R'_1$ et $R'_2$ étant différents de l'atome d'hydrogène.

$R_3$ et $R_5$, identiques ou différents, sont choisis parmi l'atome d'hydrogène, un radical ne contenant pas plus de 8 atomes de carbone environ choisi parmi les radicaux alkyle, halogénoalkyle, cyanatoalkyle, alcoxy, halogénoalcoxy, cyanoalcoxy, aryle mononucléaire éventuellement halogéné et arylalkyle mononucléaire éventuellement halogéné dont la partie alkyle est en $C_1$ - $C_4$.

$R_4$ est choisi parmi l'atome d'hydrogène, un radical ne contenant pas plus de 8 atomes de carbone environ choisi parmi un radical alkyle, halogénoalkyle et aryle ou bien $R_4$ conjointement avec $R_5$, forme un radical hydrocarboné cyclique ne contenant pas plus de 12 atomes de carbone et éventuellement substitué par des radicaux chloro, nitro et cyano.

## Patentansprüche

1. Organopolysiloxanzusammensetzung, die von Umgebungstemperatur an vulkanisierbar ist, dadurch gekennzeichnet, daß sie enthält:

(1) Mindestens ein alpha-omega-Dihydroxydiorganopolysiloxanpolymeres mit einer Viskosität zwischen 500 und 1.000.000 mPa.s bei 25°C, dessen organische Reste einwertige Kohlenwasserstoffreste sind;

(2) mindestens einen Füllstoff;

(3) mindestens ein Vernetzungsmittel, ausgewählt unter

(3a) den Polyalkoxysilanen der Formel:

$$(R_1O)_aSi(R_2)_{4-a} \quad (Ia)$$

worin a 3 oder 4 ist, $R_1$ und $R_2$, die identisch oder verschieden sind, ausgewählt sind unter einem einwertigen Kohlenwasserstoffrest mit bis zu 8 Kohlenstoffatomen, $R_1$ darüber hinaus einen Rest $R_3OR_1$ bedeuten kann, worin $R_3$ ein zweiwertiger Kohlenwasserstoffrest mit bis zu 6 Kohlenstoffatomen ist und $R_1$ die vorstehend angegebene Bedeutung hat;

(3b) den Polyalkoxysilanen, die mindestens zwei Alkoxyreste aufweisen, die je Molekül an ein Siliciumatom gebunden sind, worin die Siliciumatome durch Si-O-Si-Bindungen verbunden sind und die anderen Valenzen der Siliciumatome durch Reste $R_1O$ oder $R_2$ abgesättigt sind, wobei $R_1$ und $R_2$ die vorstehend angegebene Bedeutung haben;

(4) eine katalytisch wirksame Menge mindestens einer katalytischen Zinnverbindung;

(5) mindestens ein Silan der Formel:

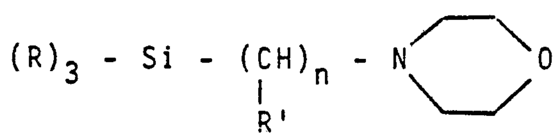

(I)

worin der Rest R ein Alkyl- oder Alkoxyrest mit einschließlich 1 bis 4 Kohlenstoffatomen ist, wovon mindestens zwei der Reste R Alkoxyreste sind, R' ausgewählt ist unter einem Wasserstoffatom und einem Alkylrest mit einschließlich 1 bis 3 Kohlenstoffatomen, und n eine ganze Zahl zwischen 3 und 10 ist.

2. Zusammensetzung gemäß Anspruch 1, dadurch gekennzeichnet, daß das Silan ausgewählt ist unter

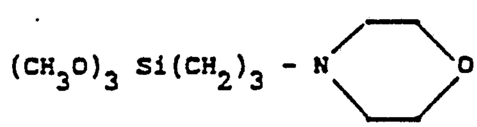

und

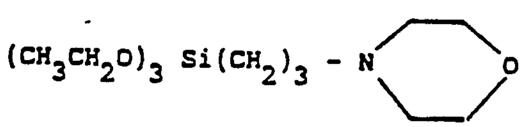

3. Zusammensetzung gemäß Anspruch 1 oder 2, dadurch gekennzeichnet, daß das Vernetzungsmittel (3) ausgewählt ist unter den Alkylsilicaten, den Alkyltrialkoxysilanen und den Alkylpolysilicaten, worin die organischen Reste Alkylreste mit 1 bis 4 Kohlenstoffatomen sind.

4. Zusammensetzung gemäß einem der vorgehenden Ansprüche, dadurch gekennzeichnet, daß sie für 100 Teile von (1), 5 bis 80 Teile von (2), 0,5 bis 15 Teile von (3), 0,005 bis 1 Teil von (4), berechnet in Gewicht metallisches Zinn, und 0,5 bis 10 Teile von (5) enthält.

5. Zusammensetzung gemäß einem der vorhergehenden Ansprüche, dadurch gekennzeichnet, daß die Verbindung (4) ausgewählt ist unter einer Verbindung der Formel:

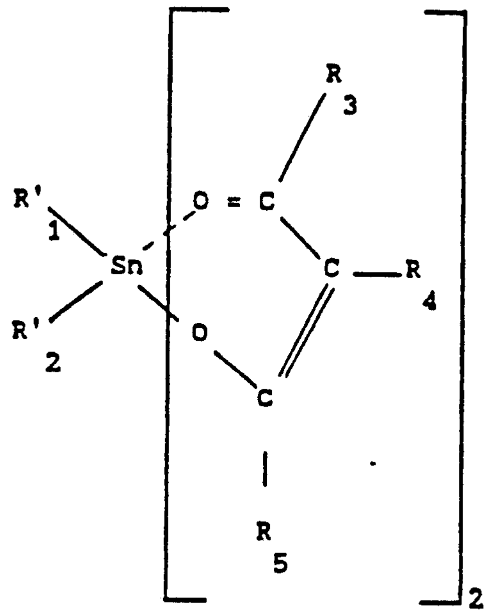

(II)

worin die Reste $R'_1$ und $R'_2$, die identisch oder verschieden sind, einen Alkylrest mit $C_1$-$C_{12}$, einen Alkoxylrest mit $C_1$-$C_{12}$, einen Alkenylrest mit $C_1$-$C_{12}$, einen Acylrest mit $C_1$-$C_{12}$, einen Acyloxyrest mit $C_1$-$C_6$, einen gegebenfalls halogenierten Cycloalkylrest mit $C_5$-$C_8$, einen einkernigen Arylrest, dessen Alkylteil $C_1$-$C_4$ hat, bedeuten, wobei $R'_1$ $R'_2$ verschieden vom Wasserstoffatom sind;

$R_3$ und $R_5$, die identisch oder verschieden sind, ausgewählt sind unter einem Wasserstoffatom, einem Rest, der nicht mehr als etwa 8 Kohlenstoffatome enthält, ausgewählt unter den Resten Alkyl, Halogenalkyl, Cynaatoalkyl, Alkoxy, Halogenalkoxy, Cyanoalkoxy, gegebenfalls halogeniertes einkerniges Aryl und gegebenenfalls halogeniertes einkerniges Arylalkyl, dessen Alkylteil $C_1$-$C_4$ ist.

$R_4$ ausgewählt ist unter Wasserstoffatom, einem Rest, der nicht mehr als etwa 8 Kohlenstoffatome enthält, ausgewählt unter einem Alkyl-, Halogenalkyl- und Arylrest, oder $R_4$ und $R_5$ bilden zusammen einen cyclischen Kohlenwasserstoffrest, der nicht mehr als 12 Kohlenstoffatome enthält und gegebenfalls durch Chlor-, Nitro- und Cyanoreste substituiert ist.

## Claims

1. Organopolysiloxane composition capable of being vulcanized starting at ambient temperature, characterized in that it incorporates:

(1) at least one alpha, omega-dihydroxydiorganopolysiloxane polymer with a viscosity between 500 and 1,000,000 mpa s at 25°C, in which the organic radicals are monovalent hydrocarbon radicals;

(2) at least one filler;

(3) at least one crosslinking agent chosen from

(3a) the polyalkoxysilanes of formula:

$$(R_1O)_aSi\,(R_2)_{4-a} \quad (Ia)$$

in which a is 3 or 4, $R_1$ and $R_2$ which are identical or different, are chosen from a monovalent hydrocarbon radical containing up to 8 carbon atoms, $R_1$ may additionally denote a radical $R_3OR_1$, in which $R_3$ is a divalent hydrocarbon radical containing up to 6 carbon atoms and $R_1$ has the above meaning;

(3b) the polyalkoxysilanes containing at least two alkoxy radicals bonded to a silicon atom per molecule in which the silicon atoms are bonded by Si-O-Si bonds, the other valencies of the silicon atoms being satisfied by radicals $R_1O$ or $R_2$, $R_1$ and $R_2$ having the meaning given above;

(4) a catalytically effective quantity of at least one catalytic tin compound;

(5) at least one silane of formula:

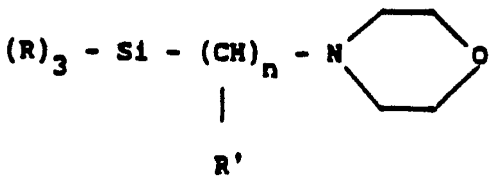

(I)

in which the radical R' is an alkyl or alkoxy radical containing from 1 to 4 carbon atoms inclusive, at least two of the radicals R are alkoxy, R is chosen from a hydrogen atom and an alkyl radical containing from 1 to 3 carbon atoms inclusive, and n is an integer from 3 to 10.

2. Composition according to claim 1, characterized in that the silane is chosen from:

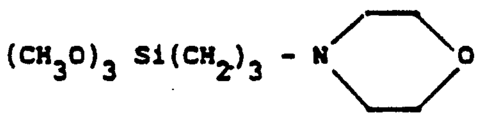

and

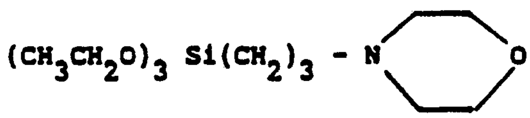

3. Composition according to claim 1 or 2, characterized in that the crosslinking agent (3) is chosen from alkyl silicates, alkyltrialkoxysilanes, and alkyl polysilicates, in which the organic radicals are alkyl radicals containing from 1 to 4 carbon atoms.

4. Composition according to any one of the preceding claims, characterized in that it incorporates, per 100 parts of (1), 5 to 80 parts of (2), 0.5 to 15 parts of (3), 0.005 to 1 part of (4), calculated as the weight of metal tin and from 0.5 to 10 parts of (5).

5. Composition according to any one of the preceding claims, characterized in that the compound (4) is chosen from a compound of formula:

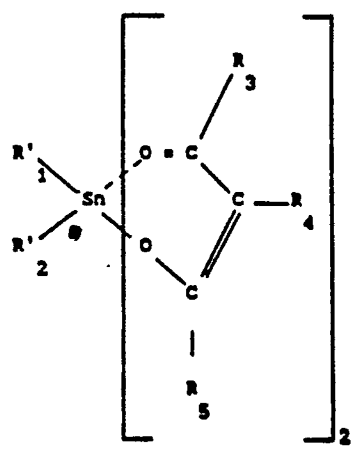

(II)

in which:

the radicals $R'_1$ and $R'_2$, which are identical or different, denote a $C_1$ - $C_{12}$ alkyl radical, a $C_1$ - $C_{12}$ alkoxy radical, a $C_1$ - $C_{12}$ alkenyl radical, a $C_1$ - $C_{12}$ acyl radical, a $C_1$ - $C_6$ acyloxy radical, an optionally halogenated $C_5$ - $C_8$ cycloalkyl radical, a mononuclear aryl radical in which the alkyl part is $C_1$ - $C_4$, $R'_1$ and $R'_2$ being other than the hydrogen atom.

$R_3$ and $R_5$, which are identical or different, are chosen from the hydrogen atom, a radical containing at most approximately 8 carbon atoms, chosen from alkyl, haloalkyl, cyanatoalkyl, alkoxy, haloalkoxy and cyanoalkoxy radicals, optionally halogenated mononuclear aryl radicals and optionally halogenated mononuclear arylalkyl radicals in which the alkyl part is $C_1$ - $C_4$.

$R_4$ is chosen from the hydrogen atom, a radical containing at most approximately 8 carbon atoms, chosen from an alkyl, haloalkyl and aryl radical or else $R_4$ together with $R_5$ forms a cyclic hydrocarbon radical containing at most 12 carbon atoms and optionally substituted by chloro, nitro and cyano radicals.